# FASCICULE DE BREVET EUROPEEN

(11) **EP 2 849 122 B1**
(45) Date de publication et mention de la délivrance du brevet: **14.09.2016**
(21) Numéro de dépôt: 14193160.0
(22) Date de dépôt: 09.06.2011
(51) Int. Cl.: G06K 19/07, G07F 7/10, G06Q 20/24, G06K 19/077, G06Q 20/34

(54) **Carte à microcircuit à indicateur et procédé mis en oeuvre dans une telle carte**
Mikrochipkarte mit Indikator, und Umsetzungsverfahren einer solchen Karte
Smart card with indicator light and method implemented in such a card

(30) Priorité: 11.06.2010 FR 1054646
(43) Date de publication de la demande: 18.03.2015
(62) Demande divisionnaire de: 11169241.4
(73) Titulaire: Oberthur Technologies, 92700 Colombes (FR)
(72) Inventeur: Meslin, Jean-Marc, 95170 Deuil la Barre (FR)
(74) Mandataire: Santarelli

(56) Documents cités:
- WO-A1-99/16030
- WO-A1-03/001433
- US-A1- 2005 092 830

## Description

L'invention concerne une carte à microcircuit et un procédé mis en oeuvre dans une telle carte.

Il est bien connu d'utiliser les cartes à microcircuit comme support de données qu'un utilisateur pourra présenter pour pouvoir jouir de prérogatives attribuées au détenteur de la carte.

Dans ce contexte, la carte dialogue typiquement avec un terminal qui détermine, sur la base de données échangées avec la carte (originaire de la carte ou non, comme dans le cas d'un code fourni par l'utilisateur au terminal), si le porteur de carte (c'est-à-dire l'utilisateur) est autorisé à bénéficier des services concernés.

Une même carte à microcircuit peut par ailleurs être utilisée pour plusieurs applications, c'est-à-dire contenir des données qui rendent cette carte capable d'autoriser différents services à l'utilisateur.

L'application utilisée au cours d'une transaction donnée est sélectionnée par le terminal (en général suite à un choix de l'utilisateur, par exemple sur une interface utilisateur du terminal) ; la carte reçoit une information de sélection de l'application concernée et poursuit son fonctionnement dans le cadre de cette application.

WO 03/001433 A1 divulgue une carte à puce comprenant des touches capables de sélectionner une des applications stockées dans la carte et une interface pour communiquer avec un lecteur externe. La carte comprend aussi un afficheur capable d'afficher des symboles A-D indiquant à l'utilisateur les applications présentes dans la carte. WO 99/16030 A1 divulgue une carte à multi-applications. La carte comprend une interface de communication, un microcontrôleur et une mémoire indiquant l'application sélectionnée par l'utilisateur. Cette possibilité de fonctionner selon plusieurs applications peut toutefois se révéler complexe pour l'utilisateur, qui n'a d'ailleurs fréquemment pas connaissance de cette possibilité. Par exemple, lorsque l'utilisateur doit choisir sur un écran du terminal quelle application il souhaite utiliser, l'affichage est en général succinct et ne permet pas toujours de comprendre le fonctionnement de l'application concernée, ni d'entrevoir ses conséquences éventuelles, en particulier lorsque le terminal affiche des informations dans une langue étrangère à celle du porteur de la carte à microcircuit.

Dans ce cadre, l'invention propose une carte à microcircuit selon la revendication 1.

L'indicateur permet ainsi au porteur de la carte de connaître l'application utilisée, quelle que soit la nature du terminal et l'affichage que celui-ci offre.

On peut prévoir par exemple que la carte comprenne des moyens d'échange de données avec un lecteur (par exemple une interface à contacts et/ou une interface sans contact) et que ces moyens d'échange soient aptes à recevoir cette commande de sélection. Une telle commande, émise par le terminal, entraîne la poursuite du fonctionnement de la carte dans le cadre de l'application désignée par l'information de sélection.

Dans ce contexte, les moyens de réception font par exemple partie des moyens d'échange.

Selon un premier exemple de réalisation, des moyens de mise en oeuvre de la première application (par exemple une application de débit) sont aptes à commander l'indicateur dans la première configuration et des moyens de mise en oeuvre de la seconde application (par exemple une application de crédit) sont aptes à commander l'indicateur dans la seconde configuration.

La configuration est dans ce cas commandée pendant l'exécution de l'application concernée.

L'indicateur est typiquement situé sur une face de la carte portant au moins un contact électrique, à l'opposé dudit contact.

L'invention propose également un procédé selon la revendication 4.

La commande de sélection peut alors être reçue par (c'est-à-dire à travers) les moyens d'échange de la carte déjà mentionnés.

Selon un premier mode de réalisation, l'indicateur est commandé dans la première configuration au cours de la mise en oeuvre de la première application et en ce que l'indicateur est commandé dans la seconde configuration au cours de la mise en oeuvre de la seconde application.

La commande de sélection précédemment mentionnée est par exemple une commande APDU SELECT conforme à la norme ISO 7816.

D'autres caractéristiques et avantages de l'invention apparaitront à la lumière de la description qui suit, faite en référence aux dessins annexés dans lesquels :
- la figure 1 représente un système comprenant un terminal recevant une carte à microcircuit ;
- la figure 2 montre la carte à microcircuit de la figure 1 en vue de dessus ;
- la figure 3 décrit les éléments principaux constituant la carte à microcircuit de la figure 2 ;
- la figure 4 représente un exemple de procédé mis en oeuvre au sein de la carte à microcircuit des figures 2 et 3 conformément aux enseignements de l'invention ;
- la figure 5 représente un exemple d'organisation d'une mémoire de la carte à microcircuit ;
- la figure 6 représente un autre exemple de procédé qui peut être mis en oeuvre au sein d'une carte à microcircuit conformément aux enseignements de l'invention ;
- la figure 7 représente un exemple d'organisation d'une mémoire dans le cadre du procédé représenté à la figure 6.

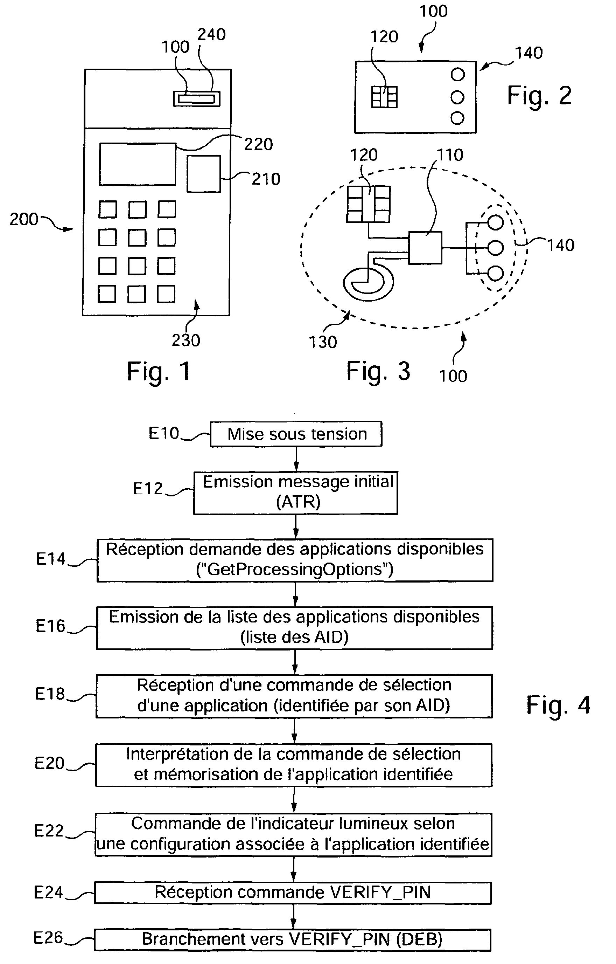

La **figure 1** illustre un exemple typique d'un contexte dans lequel est mise en oeuvre l'invention.

Un terminal 200 comprend une interface utilisateur formée d'un clavier 230 et d'un écran 220.

Le fonctionnement du terminal 200 est piloté par un microcontrôleur 210 (comprenant typiquement un microprocesseur et des mémoires utilisées par le microprocesseur) connecté (de manière non représentée) au clavier 230, à l'écran 220, ainsi qu'à un lecteur de carte à microcircuit 240.

On a représenté sur la figure 1 une carte à microcircuit 100 (du type décrit ci-après en référence aux figures 2 et 3) insérée dans le lecteur 240.

Comme visible en **figure 2****,** la carte à microcircuit 100 comprend une interface électrique à contacts (ou vignette) 120 destinée à coopérer avec des plots électriques du lecteur de carte 240 afin de permettre des échanges de données entre le terminal 200 (en particulier le microcontrôleur 210) et la carte 100 (en particulier son microcontrôleur 110 décrit plus bas).

La carte à microcircuit 100 présente par ailleurs sur sa face supérieure (c'est-à-dire sa face portant l'interface à contacts 120 déjà mentionnée) un indicateur lumineux formé ici de trois diodes électroluminescentes (ou LEDs) 140.

Dans le mode de réalisation décrit ici, les trois diodes de l'indicateur lumineux 140 sont alignées le long d'un bord de la carte 100 opposé au bord avoisinant l'interface à contacts 120. (Le bord au niveau duquel est situé le dispositif lumineux 140 et le bord voisin de l'interface à contacts 120 correspondent tous les deux aux petits côtés du rectangle formé par la carte à microcircuit 100 en projection dans le plan de sa face supérieure déjà mentionnée.)

Le lecteur de carte 240 reçoit dans une fente prévue à cet effet seulement une partie de la carte 100 insérée dans ce lecteur (la partie portant l'interface à contacts 120 qui vient alors coopérer avec les plots de connexion du lecteur 240 comme déjà indiqué) de telle sorte que l'indicateur lumineux 140 demeure à l'extérieur du lecteur 240, et est donc visible par l'utilisateur.

On remarque que l'on décrit ici un système dans lequel la carte à microcircuit 100 et le terminal 200 interagissent au moyen de contacts, par exemple conformément à la norme ISO7816. On pourrait prévoir en variante que la carte à microcircuit 100 et le terminal 200 interagissent au moyen d'une interface sans contact (notamment celle présentée en **figure 3** et décrite plus bas dans la carte à microcircuit 100).

Les éléments principaux du fonctionnement électrique de la carte à microcircuit 100 sont représentés en **figure 3****.**

L'interface à contacts 120 déjà décrite est reliée à un microcontrôleur 110 formé d'un microprocesseur, d'une mémoire morte (ou ROM) et d'une mémoire réinscriptible (typiquement une EEPROM).

La carte à microcircuit peut comme déjà indiqué inclure une interface sans contact 130, comprenant notamment une antenne, et reliée dans ce cas au microcontrôleur 110.

La carte à microcircuit 100 comprend enfin l'indicateur lumineux 140 déjà mentionné ; cet indicateur lumineux 140 est relié au microcontrôleur 110 de sorte que le microprocesseur du microcontrôleur 110 peut commander la mise sous tension ou hors tension des différentes diodes formant l'indicateur (et donc l'émission ou non de lumière par chacune des diodes) selon plusieurs configurations.

L'indicateur lumineux 140 est alimenté (lorsque le microcontrôleur 110 commande sa mise sous tension) au moyen de l'alimentation fournie à la carte par le terminal (soit par l'interface à contact 120, soit par l'interface sans contact 130) comme expliqué plus loin.

La **figure 4** représente un premier exemple de procédé mis en oeuvre au sein de la carte à microcircuit 100 lorsqu'elle est insérée dans le lecteur 240 et conformément aux enseignements de l'invention.

L'insertion de la carte 100 dans le lecteur 240 permet tout d'abord la mise sous tension des éléments de la carte à microcircuit 100, et notamment du microcontrôleur 110 (étape E10). En effet, la carte à microcircuit 100 décrite ici ne possède aucune alimentation interne et ce n'est qu'après connexion au terminal 240 que ses éléments électriques sont alimentés.

On remarque que dans la variante où la communication entre le terminal 200 et la carte à microcircuit 100 est réalisée sans contact, au moyen de l'interface sans contact 130, la carte à microcircuit 100 est téléalimentée par le terminal 200 (qui fait alors office de lecteur).

Après sa mise sous tension, la carte à microcircuit 100 est initialisée et émet (pour signaler sa présence et son fonctionnement correct) un message initial prédéterminé, généralement connu sous le nom d"' *Answer To Reset*" ou ATR (étape E12).

Lorsqu'il reçoit ce message initial de la carte à microcircuit 100, le terminal 200 (c'est-à-dire principalement son microcontrôleur 210 via le lecteur 240) adresse une requête destinée à la carte en vue de recevoir une liste des applications disponibles sur cette carte (commande "*Get Processing Options*").

La carte à microcircuit 100 (c'est-à-dire son microcontrôleur 110) reçoit à l'étape E14 cette requête et y répond en émettant à l'étape E16 une liste des applications disponibles à destination du terminal 200.

Cette liste est formée d'identifiants standardisés (et donc prédéterminés) des différentes applications disponibles sur la carte. De tels identifiants sont par exemple les AID couramment utilisés (AID signifiant "*Application Identifier*")*.*

Le terminal 200 reçoit la liste des applications disponibles sur la carte (c'est-à-dire la liste des AID).

Selon un exemple possible de mise en oeuvre, le terminal 200 affiche alors sur son écran 220 une liste de possibilités correspondant chacune à une application disponible sur la carte, conformément à ce qu'indique la liste d'applications reçues de la carte 100.

L'utilisateur peut ainsi sélectionner à l'aide du clavier 230 quelle application il souhaite utiliser.

Selon un autre exemple possible de mise en oeuvre, le terminal procède au choix de l'application à utiliser sans solliciter l'utilisateur. Ce peut être le cas notamment lorsque, parmi les applications disponibles telles que listées dans la liste reçue de la carte à microcircuit 100, seule une application peut être mise en oeuvre par le terminal concerné. Le choix se porte alors automatiquement sur cette application.

Dans tous les cas, le terminal 200 émet ensuite une commande de sélection de l'application choisie (soit par l'utilisateur, soit automatiquement par le terminal 200). Cette commande de sélection est par exemple une commande "Select".

La carte à microcircuit 100 reçoit ainsi à l'étape E18 une commande de sélection d'une application identifiée par l'identifiant AID contenu dans cette commande de sélection.

Le microcontrôleur 110 procède alors à l'étape E20 à l'interprétation de cette commande de sélection et mémorise, par exemple dans la mémoire vive du microcontrôleur 110, l'application identifiée, c'est-à-dire celle sélectionnée au niveau du terminal.

Cette mémorisation est par exemple réalisée en écrivant, à une adresse donnée de la mémoire réinscriptible, l'adresse (DEB ou CRED dans l'exemple décrit ici) à partir de laquelle les instructions de mise en oeuvre de l'application concernée sont mémorisées en mémoire morte (ou, en variante, dans la mémoire réinscriptible).

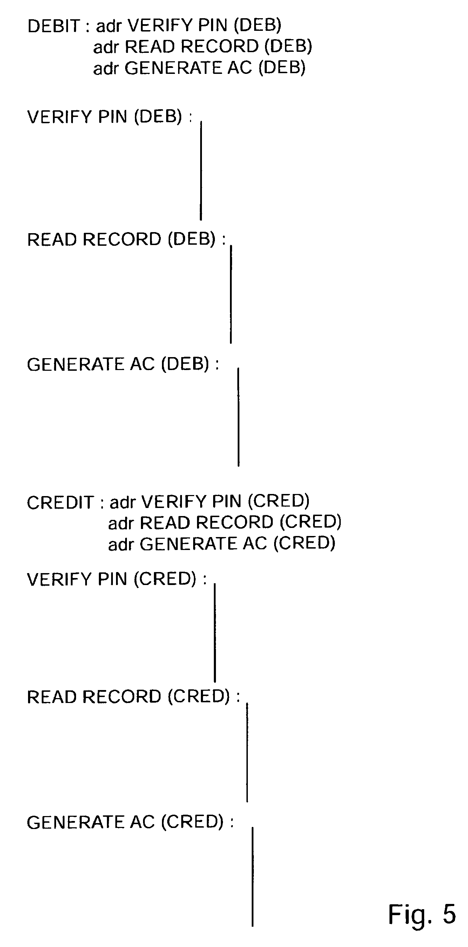

Ainsi, selon par exemple que l'application choisie est une application de débit ou une application de crédit, le microcontrôleur 110 commandera l'écriture en mémoire réinscriptible soit de l'adresse DEBIT, soit de l'adresse CREDIT, où résident respectivement comme montré en **figure 5** les instructions nécessaires à l'exécution des diverses commandes (par exemple VERIFY PIN, READ RECORD, GENERATE AC) susceptibles d'être mises en oeuvre au cours du déroulement de l'application concernée.

Le microcircuit 110 commande par ailleurs l'indicateur lumineux 140 selon une configuration associée à l'application identifiée (étape E22). Par exemple, le microcircuit 110 commande la mise sous tension d'une diode électroluminescente de couleur verte lorsque l'application sélectionnée (identifiée par l'identifiant AID) est une application de débit (les autres diodes étant alors hors tension) et met sous tension une diode électroluminescente de couleur bleue si l'application sélectionnée est une application de crédit (les autres diodes étant hors tension).

On remarque que les couleurs des diodes électroluminescentes qui viennent d'être indiquées peuvent être obtenues en ajoutant un filtre coloré sur la diode concernée.

On peut prévoir que le microcontrôleur 110 commande l'indicateur 140 comme décrit ci-dessus conformément à une information mémorisée en mémoire réinscriptible et associant l'application et la configuration de l'indicateur souhaitée pour cette application. Cette information peut être inscrite dans la mémoire lors de la personnalisation de la carte à microcircuit.

Les échanges de données entre le terminal 200 et la carte à microcircuit 100 se poursuit ensuite par l'émission de commandes du terminal 200 à destination de la carte à microcircuit 100.

Par exemple, la carte à microcircuit 100 reçoit une commande VERIFY PIN à l'étape E24. Le microcircuit du microcontrôleur 110 lit alors dans la mémoire réinscriptible, l'adresse mémorisée précédemment (par exemple DEBIT), puis lit, au niveau de cette adresse DEBIT, l'adresse VERIFY PIN (DEB) à laquelle se situent les instructions de mise en oeuvre de la commande VERIFY PIN dans le cadre de l'application de débit, et provoque enfin un saut à cette dernière adresse VERIFY PIN (DEB) afin de mettre en oeuvre ces instructions (étape E26).

On comprend que l'activation de l'indicateur 140 selon une configuration associée à l'application sélectionnée permet à l'utilisateur d'avoir en permanence un retour sur l'application effectivement utilisée et par exemple de stopper la transaction si une application non souhaitée est utilisée par le terminal 200.

On peut prévoir par ailleurs que la carte à microcircuit présente des inscriptions à proximité de chaque diode électroluminescente de manière à expliciter la signification de la mise sous tension de la diode électroluminescente située au voisinage immédiat de l'inscription concernée.

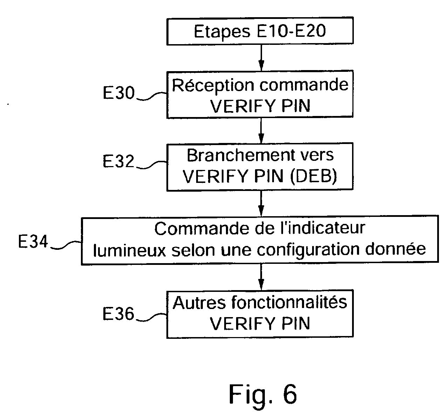

La **figure 6** représente les étapes d'un second exemple de procédé qui peut être mis en oeuvre au sein de la carte à microcircuit 100 conformément aux enseignements de l'invention.

Ce procédé débute par des étapes E10 à E20 identiques à celles déjà décrites en référence à la figure 4 et qui ne seront donc pas décrites à nouveau.

On remarque par contre que le procédé de la figure 6 ne comprend pas l'étape E22 de commande de l'indicateur lumineux en fonction de l'application identifiée.

Le processus de la figure 6 poursuit donc après l'étape E20 par la réception d'une commande provenant du terminal 200, par exemple la commande VERIFY PIN (étape E30).

Comme dans le cas de la figure 4, le microcontrôleur 110 lit l'adresse de l'application précédemment sélectionnée, par exemple l'adresse DEB.

A cette adresse DEB (ici en mémoire morte), le microcontrôleur 110 lit l'adresse VERIFY PIN (DEB) au niveau de laquelle sont mémorisées les instructions relatives à la commande VERIFY PIN dans le cadre de l'application de débit.

Le microcontrôleur 110 saute alors à cette dernière adresse, c'est-à-dire qu'il exécute les instructions listées à partir de cette adresse VERIFY PIN (DEB) à l'étape E32.

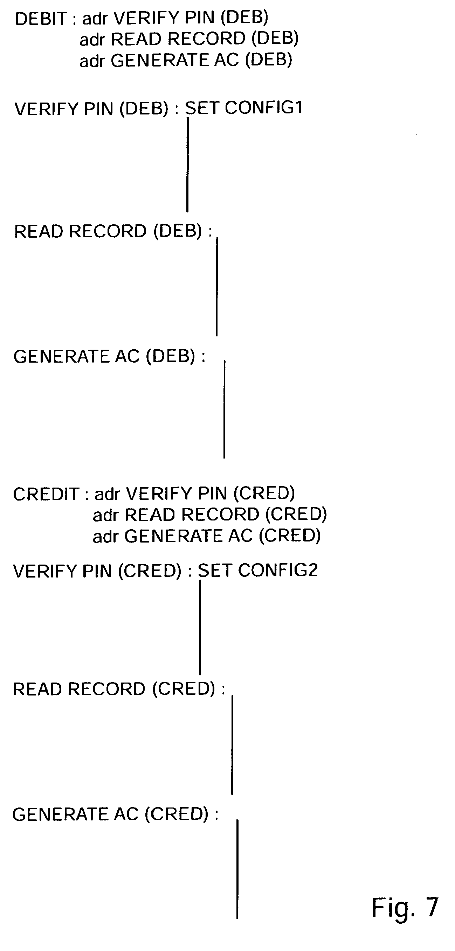

Comme visible en **figure 7****,** ces instructions comprennent notamment des instructions de commande de l'indicateur lumineux 140 dans une configuration donnée (dénommée CONFIG1 en figure 7) à l'étape E34.

Le microcontrôleur 110 poursuit ensuite l'exécution d'autres instructions mémorisées à partir de l'adresse VERIFY PIN (DEB) afin de mettre en oeuvre les autres fonctionnalités de cette commande, notamment en l'occurrence la vérification du code personnel d'identification (ou PIN) associé à l'utilisateur.

On prévoit comme visible en figure 7 que des instructions de commande de l'indicateur lumineux selon une autre configuration (configuration CONFIG2 en figure 7) soient insérées au sein des instructions relatives à au moins une commande mise en oeuvre dans le cadre d'une autre application (ici une application de crédit).

Ainsi, du fait de l'exécution de la commande concernée, l'indicateur lumineux a une configuration qui dépend de l'application dans le cadre de laquelle la commande est mise en oeuvre, ce qui permet à l'utilisateur de savoir quelle application est utilisée, comme dans le cadre du premier exemple décrit en référence à la figure 4.

Comme pour la premier mode de réalisation, on peut prévoir que le microcontrôleur 110 commande l'indicateur 140 comme décrit ci-dessus conformément à une information mémorisée en mémoire réinscriptible et associant l'application et la configuration de l'indicateur souhaitée pour cette application. Cette information peut être inscrite dans la mémoire lors de la personnalisation de la carte à microcircuit.

Les exemples qui précèdent ne sont que des modes possibles de mise en oeuvre de l'invention.

## Revendications

1. Carte à microcircuit (100) comprenant :
- un indicateur lumineux (140) comprenant une première et une seconde diodes électroluminescentes;
- des moyens de réception (120, 130) aptes à recevoir une commande de sélection contenant une information de sélection d'une application ;
- des moyens de commande (110) de l'indicateur lumineux (140) dans une première configuration dans laquelle la première diode électroluminescente est active et la seconde diode électroluminescente est inactive, lorsque l'information de sélection désigne une première application et dans une seconde configuration, distincte de la première configuration, dans laquelle la première diode électroluminescente est inactive et la seconde diode électroluminescente est active, lorsque l'information de sélection désigne une seconde application.

2. Carte à microcircuit selon la revendication 1, dans laquelle des moyens de mise en oeuvre de la première application sont aptes à commander l'indicateur lumineux dans la première configuration et dans laquelle des moyens de mise en oeuvre de la seconde application sont aptes à commander l'indicateur lumineux dans la seconde configuration.

3. Carte à microcircuit (100) selon l'une des revendications 1 à 2, dans laquelle l'indicateur lumineux (140) est situé sur une face de la carte (100), à l'opposé d'au moins un contact électrique de la carte.

4. Procédé mis en oeuvre dans une carte à microcircuit (100), ledit procédé comprenant les étapes suivantes :
- réception (E18 ; E24 ; E30) d'une commande de sélection contenant une information de sélection d'une application ;
- commande (E22 ; E34) d'un indicateur lumineux (140) comprenant une première et une seconde diodes électroluminescentes, dans une première configuration dans laquelle la première diode électroluminescente est active et la seconde diode électroluminescente est inactive, lorsque l'information de sélection désigne une première application, et dans une seconde configuration, distincte de la première configuration, dans laquelle la première diode électroluminescente est inactive et la seconde diode électroluminescente est active, lorsque l'information de sélection désigne une seconde application.

5. Procédé selon la revendication 4, dans lequel l'indicateur lumineux est commandé dans la première configuration au cours de la mise en oeuvre de la première application et dans lequel l'indicateur lumineux est commandé dans la seconde configuration au cours de la mise en oeuvre de la seconde application.

6. Carte à microcircuit (100) selon l'une des revendications 1 à 3, dans laquelle la commande de sélection est une commande APDU SELECT conforme à la norme ISO 7816.

7. Carte à microcircuit (100) selon l'une des revendications 1 à 3 et 6, dans laquelle la première application est une application de débit et la deuxième application est une application de crédit.

## Patentansprüche

1. Mikrochipkarte (100), umfassend:
- einen Leuchtindikator (140), umfassend eine erste und eine zweite Elektrolumineszenzdiode;
- Empfangsmittel (120, 130), die geeignet sind, eine Auswahlsteuerung zu empfangen, die eine Information zur Auswahl einer Anwendung enthält;
- Steuermittel (110) des Leuchtindikators (140) in einer ersten Auslegung, in der die erste Elektrolumineszenzdiode aktiv ist und die zweite Elektrolumineszenzdiode inaktiv ist, wenn die Auswahlinformation eine erste Anwendung bezeichnet, und in einer zweiten Auslegung, die von der ersten Auslegung verschieden ist, in der die erste Elektrolumineszenzdiode inaktiv ist und die zweite Elektrolumineszenzdiode aktiv ist, wenn die Auswahlinformation eine zweite Anwendung bezeichnet.

2. Mikrochipkarte nach Anspruch 1, wobei die Mittel zur Ausführung der ersten Anwendung geeignet sind, den Leuchtindikator in der ersten Auslegung zu steuern, und wobei die Mittel zur Ausführung der zweiten Anwendung geeignet sind, den Leuchtindikator in der zweiten Auslegung zu steuern.

3. Mikrochipkarte (100) nach einem der Ansprüche 1 bis 2, wobei der Leuchtindikator (140) an einer Fläche der Karte (100) gegenüber mindestens einem elektrischen Kontakt der Karte angeordnet ist.

4. Verfahren, welches in einer Mikrochipkarte (100) ausgeführt wird, wobei das Verfahren die folgenden Schritte umfasst:
- Empfangen (E18; E24; E30) einer Auswahlsteuerung, die eine Information zur Auswahl einer Anwendung enthält;
- Steuern (E22; E34) eines Leuchtindikators (140), der eine erste und eine zweite Elektrolumineszenzdiode umfasst, in einer ersten Auslegung, in der die erste Elektrolumineszenzdiode aktiv ist und die zweite Elektrolumineszenzdiode inaktiv ist, wenn die Auswahlinformation eine erste Anwendung bezeichnet, und in einer zweiten Auslegung, die von der ersten Auslegung verschieden ist, in der die erste Elektrolumineszenzdiode inaktiv ist und die zweite Elektrolumineszenzdiode aktiv ist, wenn die Auswahlinformation eine zweite Anwendung bezeichnet.

5. Verfahren nach Anspruch 4, wobei der Leuchtindikator in der ersten Auslegung während der Ausführung der ersten Anwendung gesteuert wird, und wobei der Leuchtindikator in der zweiten Auslegung während der Ausführung der zweiten Anwendung gesteuert wird.

6. Mikrochipkarte (100) nach einem der Ansprüche 1 bis 3, wobei die Auswahlsteuerung eine command APDU SELECT gemäß der Norm ISO 7816 ist.

7. Mikrochipkarte (100) nach einem der Ansprüche 1 bis 3 und 6, wobei die erste Anwendung eine Debit-Anwendung ist, und die zweite Anwendung eine Credit-Anwendung ist.

## Claims

1. Microcircuit card (100) comprising:
- a light indicator (140) comprising a first and a second light-emitting diode;
- reception means (120, 130) suitable for receiving a selection command containing an application selection information item;
- means (110) for commanding the light indicator (140) into a first configuration in which the first light-emitting diode is active and the second light-emitting diode is inactive, when the selection information item designates a first application and into a second configuration, distinct from the first configuration, in which the first light-emitting diode is inactive and the second light-emitting diode is active, when the selection information item designates a second application.

2. Microcircuit card according to Claim 1, wherein means for implementing the first application are suitable for commanding the light indicator into the first configuration and wherein means for implementing the second application are suitable for commanding the light indicator into the second configuration.

3. Microcircuit card (100) according to one of Claims 1 and 2, wherein the light indicator (140) is situated on a face of the card (100), opposite at least one electrical contact of the card.

4. Method implemented in a microcircuit card (100), said method comprising the following steps:
- reception (E18; E24; E30) of a selection command containing an application selection information item;
- commanding (E22; E34) of a light indicator (140) comprising a first and a second light-emitting diode into a first configuration in which the first light-emitting diode is active and the second light-emitting diode is inactive, when the selection information item designates a first application, and into a second configuration, distinct from the first configuration, in which the first light-emitting diode is inactive and the second light-emitting diode is active, when the selection information item designates a second application.

5. Method according to Claim 4, wherein the light indicator is commanded into the first configuration during the implementation of the first application and wherein the light indicator is commanded into the second configuration during the implementation of the second application.

6. Microcircuit card (100) according to one of Claims 1 to 3, wherein the selection command is an APDU SELECT command conforming to the ISO 7816 standard.

7. Microcircuit card (100) according to one of Claims 1 to 3 and 6, wherein the first application is a debit application and the second application is a credit application.
